# EUROPÄISCHE PATENTSCHRIFT

(11) **EP 1 795 298 B1**
(45) Veröffentlichungstag und Bekanntmachung des Hinweises auf die Patenterteilung: **16.07.2008**
(21) Anmeldenummer: 06023202.2
(22) Anmeldetag: 08.11.2006
(51) Int. Cl.: B23Q 1/62, B23Q 1/66, B23Q 11/08

(54) **Werkzeugmaschine mit Beladeeinrichtung**
Machine tool with loading device
Machine-outil avec dispositif de chargement

(30) Priorität: 06.12.2005 DE 102005058347
(43) Veröffentlichungstag der Anmeldung: 13.06.2007
(73) Patentinhaber: Schwäbische Werkzeugmaschinen GmbH, 78713 Schramberg-Waldmössingen (DE)
(72) Erfinder: Weber, Stefan, 78662 Bösingen (DE); Armleder, Wolfgang, 78628 Rottweil (DE)
(74) Vertreter: Kohler Schmid Möbus

(56) Entgegenhaltungen:
- EP-A1- 1 380 382
- DE-U1- 20 118 456
- US-A- 5 688 084

## Beschreibung

Die Erfindung betrifft eine Werkzeugmaschine mit einem Maschinengestell, einem Werkstückträger für zu bearbeitende Werkstücke, einer Bearbeitungseinheit mit einem Werkzeugträger zur Aufnahme von Werkzeugen und einem Beladesystem, mit welchem unbearbeitete Werkstücke an die Bearbeitungseinheit heran und bearbeitete Werkstücke abtransportiert werden.
Aus der EP 1 380 382 A1 ist eine derartige Werkzeugmaschine bekannt, bei welcher die Werkstücke von einem Schlitten aufgenommen und der Bearbeitungseinheit zugeführt werden. Dabei werden die Werkstücke durch eine vertikale Bewegung des Schlittens von einer Transportbahn abgehoben und während der Bearbeitung entlang einer vertikalen Achse bewegt. Zur Erzielung kurzer Transportwege befindet sich die Übergabestelle für die Werkstücke im Arbeitsraum. Die Transportbahn wird durch den Arbeitsraum hindurchgeführt. Daher sind die Übergabestelle und die Transportbahn besonders gegen Verunreinigungen durch Späne, Kühlmittel usw. zu schützen.

Es ist die Aufgabe der vorliegenden Erfindung eine Werkzeugmaschine der gattungsgemäßen Art mit einem schnellen und kostengünstigen Beladesystem zu einfacher zu gestalten und gleichzeitig den Arbeitsbereich zu erweitern.

Der Kerngedanke der Erfindung, die im Anspruch 1 definiert ist, besteht darin, den Werkstückträger entlang einer horizontalen Achse (Z-Achse) verfahrbar am Maschinengestell anzuordnen. Dazu ist er in Horizontalschlitten geführt und kann um eine weitere horizontale Achse, parallel zur X-Achse, geschwenkt werden. Da der Werkstückträger in horizontaler Richtung unterschiedliche Bearbeitungspositionen anfahren kann, sind bei vergrößertem Verfahrweg besonders lange Werkzeuge einsetzbar.
Die Be- und Entladeposition für die Werkstücke ist unmittelbar neben dem Arbeitsraum angeordnet. Am Werkstückträger sind Greifer vorgesehen, welche die Werkstücke erfassen. In einer vorteilhaften Ausführung ist eine Hubeinrichtung vorgesehen, welche die Werkstücke in der Be- und Entladeposition anhebt und den Greifern zuführt. Die Hubeinrichtung kann durch Öffnungen in der Fördereinrichtung hindurch oder auch von der Seite her die Werkstücke anheben. Besonders vorteilhaft ist am Horizontalschlitten für die Werkstückhaltevorrichtung ein Spritzschutz vorgesehen. Dieser wirkt mit der Verkleidung des Arbeitsraumes zusammen und verhindert, dass Verunreinigungen wie Späne oder Kühlmittel aus dem Arbeitsraum herausdringen. Der Spritzschutz bewegt sich zusammen mit dem Horizontalschlitten. Wenn der Werkstückträger sich in der Bearbeitungsposition befindet, wird der Arbeitsraum zwangsläufig geschlossen.

Im folgenden wird die Erfindung an Hand von Ausführungsbeispielen näher erläutert:
Fig. 1 zeigt eine Werkzeugmaschine in der Seitenansicht, teilweise geschnitten
Fig. 2 zeigt die Vorderansicht
Fig. 3 zeigt einen Ausschnitt, wobei die Werkstückhaltevorrichtung in der Bearbeitungsposition dargestellt ist
Fig. 4 zeigt einen Ausschnitt, wobei die Werkstückhaltevorrichtung in der Be- und Entladeposition dargestellt ist

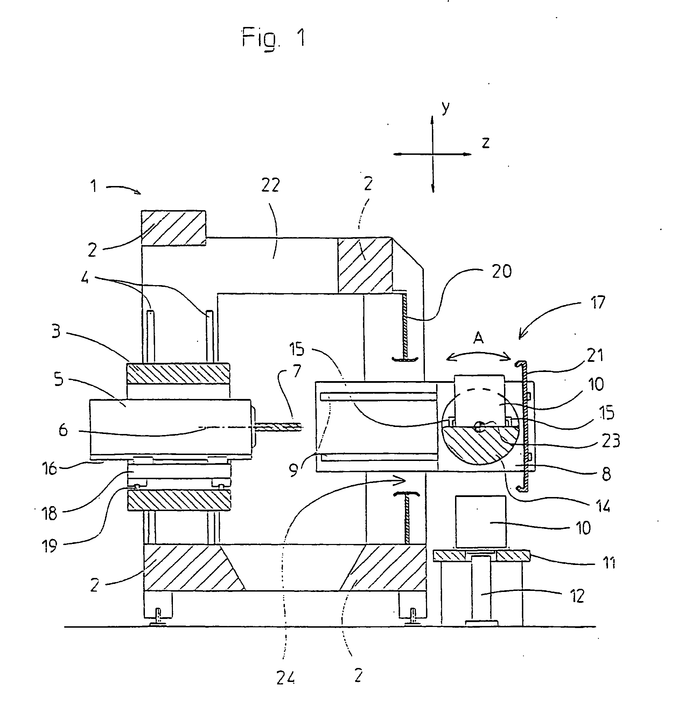

Bei der Werkzeugmaschine nach Fig. 1 sind zur besseren Übersichtlichkeit nicht erfindungswesentliche Teile, insbesondere Details des Antriebs, der Steuerung und des Gehäuses nicht dargestellt. Das Maschinengestell 2 besteht aus zwei seitlichen Rahmen 22, welche über Querträger 2 miteinander verbunden sind. Auf der linken Seite der Rahmen 22 sind vertikale Führungen 4 für den Vertikalschlitten 3 vorgesehen. An diesem ist auf Führungen 19 der Bettschlitten 18 in Richtung der X-Achse horizontal beweglich geführt. Auf dem Bettschlitten 18 ist die Bearbeitungseinheit 5 mittels Führungen 16 in Richtung der Z-Achse geführt. Die Bearbeitungseinheit 5 ist als Werkzeugspindel ausgeführt und dient zum Aufnehmen und Antreiben von Werkzeugen 7. Auf der rechten Seite des Maschinengestells 2 ist die Werkstückhaltevorrichtung 14 angeordnet. Sie ist in Horizontalschlitten 8 um eine Schwenkachse 23 drehbar gelagert und auf Führungen 9 in Richtung der Z-Achse beweglich. Unmittelbar neben dem Arbeitsraum ist die Fördereinrichtung 11 angeordnet, mit welcher unbearbeitete Werkstücke 10 heran und bearbeitete Werkstücke 10 abtransportiert werden. Die Werkstückhaltevorrichtung 14 kann in der Übergabeposition 17, direkt oberhalb der Fördereinrichtung 11 die Werkstücke 10 aufnehmen und in den Wirkbereich der Bearbeitungseinheit 5 transportieren. Am Horizontalschlitten 8 ist ein Spritzschutz 21 vorgesehen. Dieser wirkt mit der Verkleidung 20 des Arbeitsraumes zusammen und verhindert, dass Verunreinigungen wie Späne oder Kühlmittel aus dem Arbeitsraum herausdringen. Der Spritzschutz 21 bewegt sich zusammen mit dem Horizontalschlitten 8. Wenn der Werkstückträger 14 sich in der Bearbeitungsposition befindet, verschließt der Spritzschutz 21 die Ladeöffnung 24 in der Verkleidung 20.

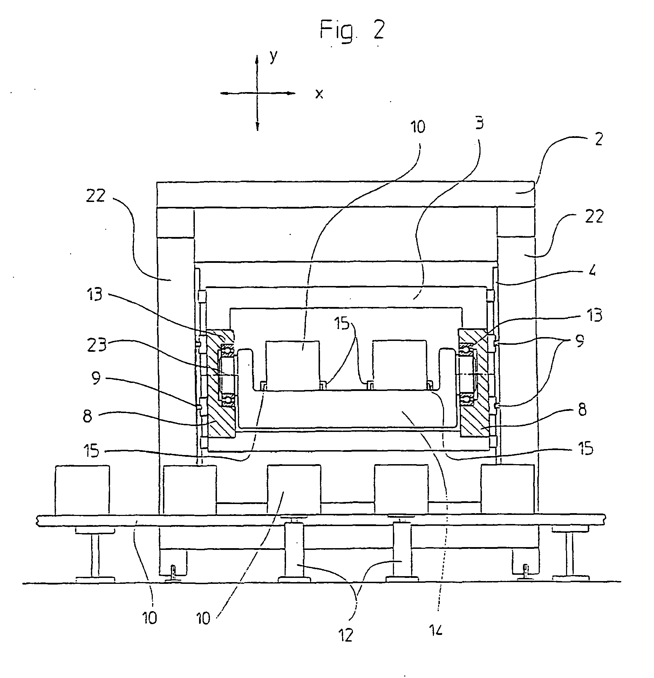

Fig. 2 zeigt die Werkzeugmaschine in der Vorderansicht. Die Schlitten 8 nehmen Lager 13 auf. In diesen kann der Werkstückträger 14 um die Schwenkachse 23 geschwenkt werden. Greifer 15 halten die Werkstücke 10 und fixieren diese auf dem Werkstückträger 14.

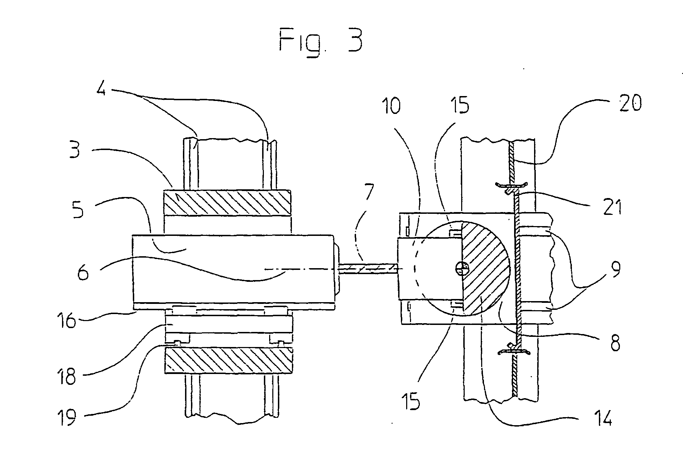

Fig. 3 zeigt die Bearbeitung eines Werkstücks 10 durch das Werkzeug 7. Der am Horizontalschlitten 8 angeordnete Spritzschutz 21 bewirkt zusammen mit der Verkleidung 21, dass Verunreinigungen wie Späne oder Kühlmittel aus dem Arbeitsraum herausdringen.

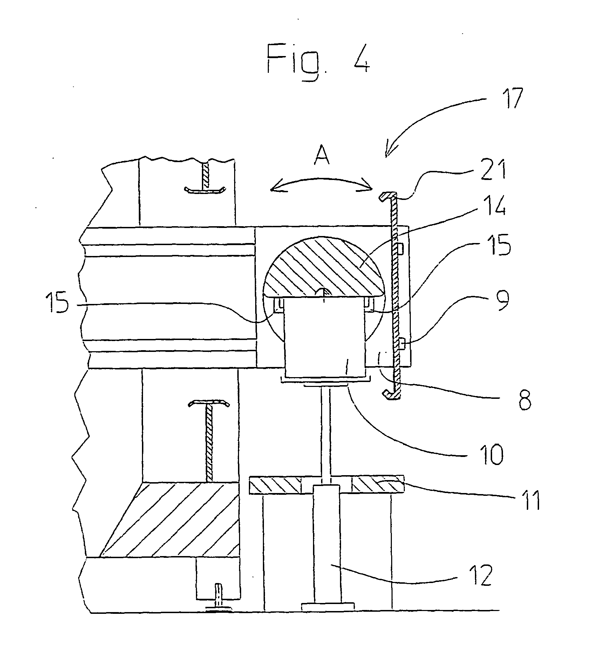

In Fig. 4 ist das Be- und Entladen dargestellt. Die Werkstückhaltevorrichtung 14 wurde um die Schwenkachse 23 geschwenkt, so dass die Greifer 15 nach unten gerichtet sind. Die Hubeinrichtung 12 ist ausgefahren und hat das Werkstück 10 angehoben, damit es von den Greifern 15 erfasst werden kann.

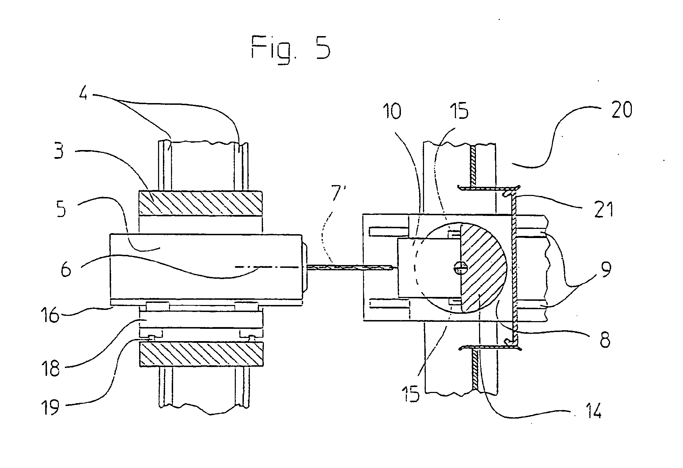

Durch den im Vergleich zum Stand der Technik vergrößerten Verfahrweg des Werkstückträgers 14 sind wesentlich längere Werkzeuge einsetzbar. Fig. 5 zeigt den Werkstückträger 14 in einer Bearbeitungsposition, in welcher ein verlängertes Werkzeug 7' einsetzbar ist. Da die Bewegungsachse der Horizontalschlitten 8 nicht nur zur Positionierung, sondern auch zur Bearbeitung eingesetzt wird, ergibt sich daraus trotz des verlängerten Werkzeuges 7' eine kompakte Maschinenbauform.

### Bezugszeichenliste

- 1: Maschinengestell
- 2: Querträger
- 3: Vertikalschlitten
- 4: Führungen
- 5: Bearbeitungseinheit
- 6: Rotationsachse
- 7: 7' Werkzeug
- 8: Horizontalschlitten
- 9: Führungen
- 10: Werkstück
- 11: Fördereinrichtung
- 12: Hubeinrichtung
- 13: Lager
- 14: Werkstückhaltevorrichtung
- 15: Greifer
- 16: Führung
- 17: Be- und Entladeposition
- 18: Bettschlitten
- 19: Führungen
- 20: Verkleidung
- 21: Spritzschutz
- 22: Rahmen
- 23: Schwenkachse
- 24: Ladeöffnung

## Patentansprüche

1. Werkzeugmaschine zur Bearbeitung von Werkstücken (10) mit einem Maschinengestell (1), mit mindestens einer Bearbeitungseinheit (5), insbesondere einer Werkzeugspindel zur Aufnahme von Werkzeugen (7, 7'), mit einer als Schwinge ausgeführten Werkstückhaltevorrichtung (14), wobei die Werkstückhaltevorrichtung (14) und die Bearbeitungseinheit (5) in Richtung der drei Hauptachsen (X, Y, Z) des Maschinenkoordinatensystems relativ zueinander am Maschinengestell (1) beweglich geführt sind, wobei die Werkstückhaltevorrichtung (14) um eine zur Z-Achse orthogonale Schwenkachse (23) drehbar gelagert ist,
**dadurch gekennzeichnet,**
**dass** die Bearbeitungseinheit (5) am Maschinengestell (1) entlang der drei Hauptachsen (X, Y, Z) beweglich geführt ist und die Werkstückhaltevorrichtung (14) an mindestens einem Horizontalschlitten (8) drehbar gelagert ist, der am Maschinengestell (1) in Richtung der Z-Achse zwischen einer Be- und Entladeposition (17) der Werkstückhaltevorrichtung (14) und dem Wirkbereich der Bearbeitungseinheit (5) verfahrbar ist.

2. Werkzeugmaschine nach Anspruch 1, **dadurch gekennzeichnet, dass** die Werkstückhaltevorrichtung (14) auf zwei den Greifern (15) gegenüberliegenden Seiten jeweils in einem Lager (13) in den Horizontalschlitten (8) drehbar gelagert ist.

3. Werkzeugmaschine nach Anspruch 1 oder 2, **dadurch gekennzeichnet, dass** eine Hubeinrichtung (12) zum Anheben der Werkstücke (10) von der Fördereinrichtung (11) in den Wirkbereich der Greifer (15) vorgesehen ist.

4. Werkzeugmaschine nach einem der Ansprüche 1 bis 3, **dadurch gekennzeichnet, dass** zum Verschließen der Ladeöffnung (24) an den Horizontalschlitten (8) ein Spritzschutz (21) vorgesehen ist.

5. Werkzeugmaschine nach einem der Ansprüche bis 4, **dadurch gekennzeichnet, dass** zum Einsatz von unterschiedlich langen Werkzeugen (7, 7') die Werkstückhaltevorrichtung (14) entlang der horizontalen Führungen (9) positionierbar ist.

## Claims

1. Machine tool for processing workpieces (10), comprising a machine frame (1), at least one processing unit (5), in particular a tool spindle for receiving tools (7, 7'), and a workpiece holder unit (14) designed as a rocker, wherein the workpiece holder unit (14) and the processing unit (5) are guided on the machine frame (1) to be movable relative to each other in the direction of the three main axes (X, Y, Z) of the machine coordinate system, wherein the workpiece holder unit (14) is disposed to be rotatable about a pivot axis (23) that is orthogonal to the Z-axis,
**characterized in that** the processing unit (5) is guided on the machine frame (1) to be movable along the three main axes (X, Y, Z), and the workpiece holder unit (14) is rotatably disposed on at least one horizontal carriage (8) that can be moved on the machine frame (1) in the direction of the Z-axis between a loading and unloading position (17) of the workpiece holder unit (14) and the effective range of the processing unit (5).

2. Machine tool according to claim 1, **characterized in that** the workpiece holder unit (14) is rotatably disposed in a bearing (13) in the horizontal carriages (8) on each of the two sides opposite to the grippers (15).

3. Machine tool according to claim 1 or 2, **characterized in that** a lifting means (12) is provided for lifting the workpieces (10) from the conveying means (11) to the effective range of the grippers (15).

4. Machine tool according to any one of the claims 1 through 3, **characterized in that** a splash guard (21) is provided on the horizontal carriages (8) for closing the loading opening (24).

5. Machine tool according to any one of the claims 1 through 4, **characterized in that** the workpiece holder unit (14) can be positioned along the horizontal guides (9) in order to use tools (7, 7') of different lengths.

## Revendications

1. Machine-outil pour usiner des pièces (10) comprenant un bâti de machine (1), au moins une unité d'usinage (5), notamment une broche porte-outil destinée à recevoir des outils (7, 7'), un dispositif d'immobilisation (14) de la pièce réalisé en tant que bielle oscillante, le dispositif d'immobilisation (14) de la pièce et l'unité d'usinage (5) étant guidés sur le bâti de machine (1) de façon à pouvoir se déplacer l'un par rapport à l'autre dans la direction des trois axes principaux (X, Y, Z) du système de coordonnées de la machine, le dispositif d'immobilisation (14) de la pièce étant monté de façon à pouvoir tourner autour d'un axe de pivotement (23) perpendiculaire à l'axe Z, **caractérisée en ce que** l'unité d'usinage (5) est guidée sur le bâti de machine (1) de façon à pouvoir se déplacer le long des trois axes principaux (X, Y, Z), et **en ce que** le dispositif d'immobilisation (14) de la pièce est monté de façon rotative sur au moins un chariot horizontal (8) qui peut être déplacé sur le bâti de machine (1), dans la direction de l'axe Z, entre une position de chargement et de déchargement (17) du dispositif d'immobilisation (14) de la pièce et le champ d'action de l'unité d'usinage (5).

2. Machine-outil selon la revendication 1, **caractérisée en ce que** sur deux côtés opposés aux griffes (15), le dispositif d'immobilisation (14) de la pièce est chaque fois monté de façon rotative dans un palier (13) situé dans les chariots horizontaux (8).

3. Machine-outil selon la revendication 1 ou 2, **caractérisée en ce qu'**un dispositif élévateur (12) est prévu pour soulever les pièces (10) du dispositif de transport (11) et les amener dans le champ d'action des griffes (15).

4. Machine-outil selon l'une des revendications 1 à 3, **caractérisée en ce qu'**une protection anti-projections (21) est prévue sur les chariots horizontaux (8) pour fermer l'ouverture de chargement (24).

5. Machine-outil selon l'une des revendications 1 à 4, **caractérisée en ce que** le dispositif d'immobilisation (14) de la pièce peut être positionné le long des glissières horizontales (9) afin de permettre la mise en oeuvre d'outils (7, 7') de longueur variable.
